# FASCICULE DE BREVET EUROPEEN

(11) **EP 2 855 177 B1**
(45) Date de publication et mention de la délivrance du brevet: **10.08.2016**
(21) Numéro de dépôt: 13731836.6
(22) Date de dépôt: 28.05.2013
(51) Int. Cl.: B60G 7/00, B62D 65/12

(54) **PIECE MECANIQUE COMPORTANT UN PALIER DE RECEPTION ADAPTE POUR RECEVOIR AU MOINS DEUX CALES CYLINDRIQUES DIFFERENTES POSSIBLES**
MECHANISCHES TEIL MIT EINEM AUFNAHMELAGER ZUR AUFNAHME VON MINDESTENS ZWEI VERSCHIEDENEN MÖGLICHEN ZYLINDRISCHEN UNTERLEGSCHEIBEN
MECHANICAL PART COMPRISING A RECEIVING BEARING SUITABLE FOR RECEIVING AT LEAST TWO DIFFERENT POSSIBLE CYLINDRICAL SHIMS

(30) Priorité: 01.06.2012 FR 1255081
(43) Date de publication de la demande: 08.04.2015
(73) Titulaire: PSA Peugeot Citroën Automobiles S.A., 78140 Velizy Villacoublay (FR)
(72) Inventeur: TISSERAND, David, F-90300 Valdoie (FR)
(74) Mandataire: Rosenberg, Muriel Sylvie
(86) Numéro de dépôt international: PCT/FR2013/051179
(87) Numéro de publication internationale: WO 2013/178929

(56) Documents cités:
- EP-A1- 0 963 865
- DE-A1-102009 008 842
- DE-A1-102010 006 284
- US-A- 3 408 124
- US-A1- 2006 131 800
- US-A1- 2010 065 998

## Description

La présente invention se rapporte à une pièce mécanique comportant un palier de réception adapté pour recevoir au moins deux cales cylindriques différentes possibles, ces dernières se différenciant par leur diamètre mais aussi, éventuellement, par leur hauteur d'emmanchement dans le palier recevant la cale. La présente invention s'applique en particulier, mais non exclusivement, à un triangle de suspension avant de véhicule adapté pour recevoir, selon le type de véhicule, au moins deux cales ou articulations élastiques différentes possibles. Elle s'applique tout particulièrement à un triangle de suspension avant de véhicule automobile.

Dans l'application évoquée ci-dessus d'un triangle de suspension avant de véhicule automobile, il est utile de pouvoir adapter, selon le type du véhicule, plusieurs cales élastiques cylindriques, de diamètres différents, dans le palier de fixation d'axe sensiblement vertical du triangle sur le berceau du véhicule. Ces cales élastiques sont destinées à absorber une grande partie des efforts des véhicules en marche. Dans cet exemple d'application également, il est souhaitable de diminuer la hauteur d'emmanchement dans le palier de la cale de plus petit diamètre par rapport à la hauteur d'emmanchement de la cale de plus grand diamètre. Une hauteur d'emmanchement plus faible suffit à la cale de plus petit diamètre pour tenir mécaniquement en fatigue et reprendre les efforts maximaux. De plus, si la hauteur d'emmanchement de la cale de plus petit diamètre restait égale à celle de la cale de plus grand diamètre, il y aurait alors un surplus de matière et, par conséquent, un surplus de poids du triangle de suspension.

On connaît déjà différentes géométries de paliers incorporés à des bras de suspension ou à des triangles de suspension de véhicules automobiles.

A titre d'exemple, le document DE 102009008842 décrit un siège de pallier de suspension sur un bras de suspension de véhicule. Le siège présente une forme géométrique en gradins sur les deux faces pour éviter les fissurations lors de l'assemblage avec le palier. Ces gradins sont obtenus par découpe.

Le but de la présente invention est de fournir une pièce mécanique, notamment de type triangle de suspension de véhicule, qui comporte un palier de réception adapté pour recevoir au moins deux cales cylindriques différentes possibles et qui soit conçue avec un poids optimal de façon à satisfaire les contraintes d'allégement des véhicules actuels.

Un autre but de la présente invention est de fournir une telle pièce mécanique, qui présente une épaisseur de palier réduite dans le cas de la cale la plus petite, cette épaisseur correspondant alors à la surface de liaison suffisante pour tenir la cale sur la pièce mécanique.

Enfin, c'est également un but de la présente invention de fournir une telle pièce mécanique, qui soit de fabrication simple et d'adaptation facile aux différentes cales possibles, qui soit robuste, fiable et économique.

Pour parvenir à ces buts, la présente invention a pour objet une pièce mécanique comportant un palier de réception adapté pour recevoir au moins deux cales cylindriques différentes possibles, chaque cale cylindrique possible ayant un diamètre et une hauteur d'emmanchement donnés. Le palier de réception est réalisé avec un orifice de réception de diamètre légèrement inférieur au diamètre de la cale de plus petit diamètre et avec une épaisseur axiale qui varie selon la direction radiale du palier de façon être égale, pour chaque diamètre de cale possible, à la hauteur d'emmanchement désirée de ladite cale possible, l'adaptation de la pièce mécanique à la cale cylindrique retenue parmi les cales possibles étant réalisée par alésage du palier de réception au diamètre de ladite cale cylindrique retenue.

Selon le mode préféré de réalisation de l'invention, l'épaisseur axiale non constante du palier de réception est obtenue par la réalisation de deux gorges situées respectivement à la partie supérieure et à la partie inférieure dudit palier de réception.

A titre d'exemple non limitatif de l'objet et de la portée de la présente invention, le nombre de cales possibles peut être de deux.

De manière avantageuse, les cales cylindriques peuvent être réalisées à partir d'un matériau élastique de type élastomère.

Selon un exemple également non limitatif de l'objet et de la portée de la présente invention, la pièce mécanique de l'invention peut être un triangle de suspension avant de véhicule, une cale cylindrique étant insérée dans un palier de fixation du triangle sur le berceau du véhicule.

Egalement à titre d'exemple non limitatif de l'objet et de la portée de la présente invention, le palier du triangle de suspension peut être adapté pour recevoir deux cales cylindriques différentes possibles, à savoir une première cale de diamètre de 68 mm et de hauteur d'emmanchement égale ou proche de 30 mm et une seconde cale de diamètre de 50 mm et de hauteur d'emmanchement égale ou proche de 10 mm.

Cette cale cylindrique peut être du type comprenant une bague cylindrique externe, un corps principal de cale cylindrique et une bague interne tubulaire destinée à recevoir le moyen de fixation du triangle de suspension sur le berceau du véhicule.

Enfin l'invention a pour objet un véhicule, en particulier un véhicule automobile, qui comporte au moins un triangle de suspension du train avant tel que décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagné de dessins dans lesquels :
- la figure 1 est une vue en perspective, schématique, d'un triangle de suspension avant de véhicule automobile avec une cale cylindrique élastique, dite cale « E2 », de grand diamètre,
- la figure 2 est une vue en coupe, schématique, du palier de réception de la cale cylindrique élastique de la figure 1 emmanchée dans son palier de réception,
- la figure 3 est une vue en perspective, schématique, du triangle de suspension avant de véhicule automobile des figures précédentes, mais avec une cale cylindrique élastique de plus petit diamètre, et
- la figure 4 est une vue en coupe, schématique, de la cale cylindrique élastique de la figure 3 emmanchée dans son palier de réception.

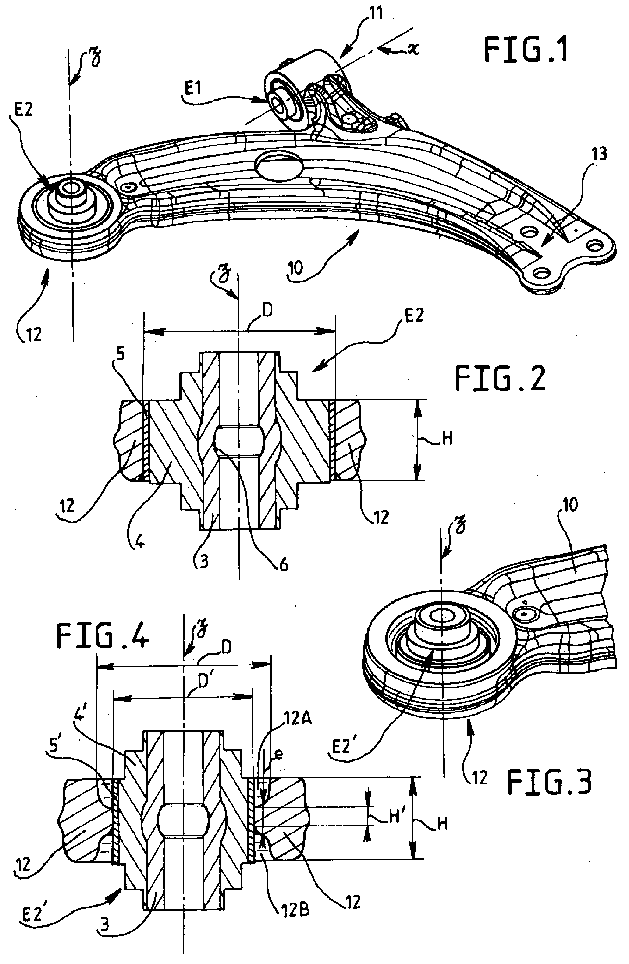

En référence au dessin de la figure 1, on a représenté un exemple de pièce mécanique selon la présente invention, à savoir un triangle de suspension avant de véhicule automobile, de référence générale 10, qui peut être réalisé en aluminium par une opération de fonderie. Le triangle comporte deux parties d'extrémité en formes de paliers désignées 11 et 12 pour la fixation du triangle 10 sur le berceau (non représenté) du véhicule automobile. La partie d'extrémité 13 du triangle 10 est destinée à recevoir une palette (non représentée) pour la fixation du triangle de suspension sur la roue du véhicule.

Les parties de fixation 11 (d'axe « x ») et 12 (d'axe « z ») comportent, chacune, une cale élastique, cylindrique, appelée aussi « articulation élastique », désignées E1 et E2, respectivement. Ces cales sont avantageusement réalisées à partir d'un matériau élastique de type élastomère.

Comme exposé précédemment, il est demandé, dans le but d'alléger le triangle de suspension, de pouvoir adapter des cales élastiques E2 de diamètres différents. A titre d'exemple, pour illustrer le principe de la présente invention, le triangle de suspension devra être conçu de manière à pouvoir s'adapter, selon le type du véhicule, à une cale élastique de diamètre 68 mm, désignée cale E2 (figures 1 et 2) dans la suite du texte, et à une cale élastique similaire, mais de diamètre inférieur et égal à 50 mm, cette cale élastique de plus petit diamètre étant désignée E2' (figures 3 et 4) dans la suite du texte.

On a représenté en coupe longitudinale sur le dessin de la figure 2 la cale élastique E2 de plus grand diamètre, à savoir de diamètre D = 68 mm. La hauteur d'emmanchement de la cale E2 dans l'épaisseur du triangle de suspension est désignée « H ». Cette hauteur d'emmanchement « H » est la longueur axiale de la surface cylindrique de liaison entre le palier 12 et la cale E2. Dans l'exemple ici décrit, cette hauteur d'emmanchement de la cale E2 de plus grand diamètre peut être de 30 mm.

Comme représenté sur le dessin de la figure 2, la cale E2 est composée d'une bague interne référencée 3, d'un corps principal de cale référencé 4 et d'une bague externe 5 en liaison avec la partie d'extrémité 12 du triangle 10. La bague interne 3 présente un évidement radial 6 pour le passage d'un axe d'articulation de type rotule (non représenté).

Le problème résolu par la solution de la présente invention est le suivant : si l'on avait alésé le palier de réception des figures 1 et 2 d'épaisseur axiale constante H pour l'adapter à la réception d'une cale de plus petit diamètre que la cale E2, c'est-à-dire si l'on avait réalisé un alésage de diamètre D' = 50 mm correspondant à la cale E2', l'épaisseur de matière autour de la cale E2' de 50 mm serait alors la même épaisseur que l'épaisseur H autour de la cale de 68 mm, soit 30 mm. Or, par expérience, il a été montré qu'une hauteur d'emmanchement substantiellement réduite de la cale E2', par exemple une hauteur d'emmanchement égale ou voisine de 10mm seulement, est suffisante pour assurer le tenue mécanique en fatigue du palier et reprendre les efforts maximaux : il y aurait, par conséquent, dans le cas de la cale E2' de petit diamètre avec une hauteur d'emmanchement H constante un surplus de matière et, donc, un surpoids du triangle de suspension 10.

Pour éviter ce surpoids du triangle de suspension 10 lorsque la cale choisie est celle de petit diamètre, la présente invention fournit un triangle de suspension 10 représenté sur les figures 3 et 4, dans lequel sont réalisés, d'une part, un orifice de départ du palier de réception 12 de diamètre légèrement inférieur au diamètre D' de la petite cale E2' et, d'autre part, deux gorges référencées 12A et 12B (figure 4) respectivement sur la partie supérieure et sur la partie inférieure du palier de réception 12 du triangle. Ces gorges 12A et 12B sont réalisées, de préférence, au cours de l'opération de fonderie du triangle de suspension 10.

De cette manière, le triangle de suspension 10 peut facilement s'adapter aux deux cales cylindriques E2 et E2', de diamètre et de hauteur d'emmanchement différents : en effet, grâce à ces gorges 12A et 12B et à l'épaisseur axiale « e » qui varie selon la direction radiale du palier, la hauteur d'emmanchement de la cale E2' de petit diamètre (D' = 50 mm) devient H' < H, c'est-à-dire passe de 30 mm à 10 mm dans l'exemple ici décrit.

Comme mieux représenté sur le dessin de la figure 4, de façon similaire à la cale E2, la cale E2' est composée d'une bague interne référencée 3 à rotule, d'un corps principal de cale référencé 4', de plus petit diamètre que le corps principal 4 de la cale E2, et d'une bague externe 5' en liaison avec la partie d'extrémité 12 du triangle 10.

Ainsi, en partant de la structure de palier de départ représentée sur la figure 4 conçue pour une cale de petit diamètre D' (50 mm) et de petite hauteur d'emmanchement H', il suffit de réaliser un alésage au diamètre D (68 mm) pour obtenir le palier adapté à la cale de 68 mm avec une hauteur d'emmanchement supérieure H.

Il importe de noter que lorsque le triangle est usiné pour recevoir la cale E2' de petit diamètre (50 mm), le contour de la cale à distance radiale au-delà du rayon de la cale de grand diamètre, par conséquent au-delà d'un rayon de 68mm/2, conserve l'épaisseur H de 30 mm environ ; ce qui permet de garder la raideur globale du triangle dans le cas où la cale retenue est la petite cale et la hauteur d'emmanchement est réduite.

Bien que dans l'exemple décrit ci-dessus, le palier de la pièce mécanique soit adapté pour recevoir deux cales cylindriques différentes possibles, la présente invention s'applique également à une pièce mécanique dont le palier est adapté pour recevoir plus de deux cales cylindriques différentes possibles. Dans ce cas, la variation selon la direction radiale du palier de l'épaisseur axiale « e » est déterminée de telle sorte que, pour chaque diamètre de cale possible, l'épaisseur « e » est égale à la hauteur d'emmanchement désirée de ladite cale possible, l'adaptation de la pièce mécanique à la cale cylindrique retenue parmi la pluralité ( > 2) de cales possibles étant réalisée par alésage du palier de réception 12 au diamètre de ladite cale cylindrique retenue.

Le triangle de suspension décrit ci-dessus, qui présente des gorges 12A, 12B issues de fonderies lui permettant une adaptation à plusieurs cales possibles, présente l'avantage d'être substantiellement plus léger que les triangles connus de l'art antérieur : il permet de gagner jusqu'à 50 grammes par triangle, soit 100 grammes sur le véhicule équipé des triangles selon l'invention.

## Revendications

1. Pièce mécanique de suspension comportant un palier de réception (12) adapté pour recevoir au moins deux cales cylindriques différentes possibles (E2, E2'), chaque cale cylindrique possible ayant un diamètre (D, D') et une hauteur d'emmanchement (H, H') donnés, **caractérisée en ce que** le palier de réception (12) est réalisé avec un orifice de réception de diamètre légèrement inférieur au diamètre (D') de la cale (E2') de plus petit diamètre et avec une épaisseur axiale (« e ») qui varie selon la direction radiale du palier, l'adaptation de la pièce mécanique à la cale cylindrique retenue parmi les cales possibles (E2, E2') étant réalisée par alésage du palier de réception (12) au diamètre de ladite cale cylindrique retenue.

2. Pièce mécanique selon la revendication 1, **caractérisée en ce que** l'épaisseur axiale (« e ») non constante du palier de réception est obtenue par la réalisation de deux gorges (12A, 12B) situées respectivement à la partie supérieure et à la partie inférieure dudit palier de réception (12).

3. Pièce mécanique selon l'une quelconque des revendications 1 et 2, **caractérisée en ce que** le nombre de cales possibles est de deux.

4. Ensemble comportant une pièce mécanique de suspension selon l'une quelconque des revendications 1 à 3 et deux cales cylindriques, **caractérisée en ce que** lesdites cales cylindriques (E1, E2) sont réalisées à partir d'un matériau élastique de type élastomère.

5. Pièce mécanique selon l'une quelconque des revendications 1 à 3, **caractérisée en ce qu'**elle est un triangle de suspension avant de véhicule, le palier étant adapté pour recevoir deux cales cylindriques différentes possibles, à savoir une première cale (E2) de diamètre (D) de 68 mm et de hauteur d'emmanchement (H) égale ou proche de 30 mm et une seconde cale (E2') de diamètre (D') de 50 mm et de hauteur d'emmanchement (H') égale ou proche de 10 mm.

6. Ensemble comportant une pièce mécanique de suspension selon la revendication 5 et deux cales cylindriques, **caractérisée en ce que** la cale cylindrique (E2 ; E2') comprend une bague cylindrique externe (5 ; 5'), un corps principal de cale cylindrique (4 ; 4') et une bague interne (3) tubulaire destinée à la fixation du triangle de suspension sur le berceau du véhicule.

7. Véhicule, en particulier véhicule automobile, **caractérisé en ce qu'**il comporte au moins une pièce mécanique selon la revendication 5.

## Patentansprüche

1. Mechanisches Aufhängungsteil, das ein Aufnahmelager (12) umfasst, das angepasst ist, um mindestens zwei mögliche unterschiedliche zylindrische Unterlegscheiben (E2, E2') aufzunehmen, wobei jede mögliche zylindrische Unterlegscheibe einen gegebenen Durchmesser (D, D') und eine gegebene Aufschrumpfhöhe (H, H') hat, **dadurch gekennzeichnet, dass** das Aufnahmelager (12) mit einer Aufnahmeöffnung mit Durchmesser leicht kleiner als der Durchmesser (D') der Unterlegscheibe (E2') mit dem kleinsten Durchmesser hergestellt ist, und mit einer axialen Stärke ("e"), die entlang der radialen Richtung des Lagers variiert, wobei die Anpassung des mechanischen Teils an die aus den möglichen Unterlegscheiben (E2, E2') ausgewählte zylindrische Unterlegscheibe durch Bohren des Aufnahmelagers (12) auf den Durchmesser der ausgewählten zylindrischen Unterlegscheibe hergestellt ist.

2. Mechanisches Teil nach Anspruch 1, **dadurch gekennzeichnet, dass** die nicht konstante axiale Stärke ("e") des Aufnahmelagers durch Herstellen von zwei Nuten (12A, 12B), die jeweils an dem oberen Teil und an dem unteren Teil des Aufnahmelagers (12) liegen, erhalten wird.

3. Mechanisches Teil nach einem der Ansprüche 1 und 2, **dadurch gekennzeichnet, dass** die mögliche Anzahl von Unterlegscheiben zwei beträgt.

4. Baugruppe, die ein mechanisches Aufhängungsteil nach einem der Ansprüche 1 bis 3 und zwei zylindrische Unterlegscheiben umfasst, **dadurch gekennzeichnet, dass** die zylindrischen Unterlegscheiben (E1, E2) aus einem elastischen Werkstoff des Typs Elastomer hergestellt sind.

5. Mechanisches Teil nach einem der Ansprüche 1 bis 3, **dadurch gekennzeichnet, dass** es ein vorderer Fahrzeug-Dreieckslenker ist, wobei das Lager angepasst ist, um zwei mögliche unterschiedliche zylindrische Unterlegscheiben aufzunehmen, nämlich eine erste Unterlegscheibe (E2) mit Durchmesser (D) 68 mm und Aufschrumpfhöhe (H) gleich oder nahe 30 mm, und eine zweite Unterlegscheibe (E2') mit Durchmesser (D') 50 mm und Aufschrumpfhöhe (H') gleich oder nahe 10 mm.

6. Baugruppe, die ein mechanisches Aufhängungsteil nach Anspruch 5 und zwei zylindrische Unterlegscheiben umfasst, **dadurch gekennzeichnet, dass** die zylindrische Unterlegscheibe (E2; E2') einen äußeren zylindrischen Ring (5; 5') , einen Hauptkörper (4; 4') der zylindrischen Unterlegscheibe und einen röhrenförmigen Innenring (3) umfasst, der zum Befestigen des Dreiecklenkers auf dem Gestell des Fahrzeugs bestimmt ist.

7. Fahrzeug, insbesondere Kraftfahrzeug, **dadurch gekennzeichnet, dass** es mindestens ein mechanisches Teil nach Anspruch 5 umfasst.

## Claims

1. A mechanical suspension part comprising a receiving bearing (12) suitable for receiving at least two different possible cylindrical shims (E2, E2'), each possible cylindrical shim having a predetermined diameter (D, D') and insertion height (H, H'), **characterized in that** the receiving bearing (12) consists of a receiving opening having a slightly smaller diameter than the diameter (D') of the shim (E2') having the smallest diameter and having an axial thickness ("e") that varies depending on the radial direction of the bearing, the adaptation of the mechanical part to the cylindrical shim selected among the possible shims (E2, E2') being carried out by boring the receiving bearing (12) to the diameter of said selected cylindrical shim.

2. The mechanical part according to Claim 1, **characterized in that** the non-constant axial thickness ("e") of the receiving bearing is obtained by the realization of two grooves (12A, 12B) situated respectively at the upper part and at the lower part of said receiving bearing (12).

3. The mechanical part according to any one of Claims 1 and 2, **characterized in that** the number of possible shims is two.

4. An assembly comprising a mechanical suspension part according to any one of Claims 1 to 3 and two cylindrical shims, **characterized in that** said cylindrical shims (E1, E2) are made from an elastic material of the elastomer type.

5. The mechanical part according to any one of Claims 1 to 3, **characterized in that** it is a vehicle front suspension wishbone, the bearing being suitable for receiving two different possible cylindrical shims, namely a first shim (E2) of diameter (D) of 68 mm and of insertion height (H) equal or close to 30 mm, and a second shim (E2') of diameter (D') of 50 mm and of insertion height (H') equal or close to 10 mm.

6. An assembly comprising a mechanical suspension part according to Claim 5 and two cylindrical shims, **characterized in that** the cylindrical shim (E2; E2') includes an external cylindrical ring (5; 5'), a main cylindrical shim body (4; 4') and a tubular internal ring (3) intended for the fixing of the suspension wishbone on the subframe of the vehicle.

7. A vehicle, in particular a motor vehicle, **characterized in that** it comprises at least one mechanical part according to Claim 5.
